# EUROPÄISCHE PATENTSCHRIFT

(11) **EP 3 235 200 B1**
(45) Veröffentlichungstag und Bekanntmachung des Hinweises auf die Patenterteilung: **17.10.2018**
(21) Anmeldenummer: 15813309.0
(22) Anmeldetag: 10.12.2015
(51) Int. Cl.: H04L 25/02

(54) **VERFAHREN ZUM EMPFANG VON RUNDFUNKSIGNALEN IN EINEM EMPFANGSGERÄT UND EMPFANGSGERÄT**
METHOD FOR RECEIVING RADIO SIGNALS IN A RECEIVING DEVICE, AND RECEIVING DEVICE
PROCÉDÉ DE RÉCEPTION DE SIGNAUX RADIOÉLECTRIQUES DANS UN APPAREIL DE RÉCEPTION ET APPAREIL DE RÉCEPTION

(30) Priorität: 16.12.2014 DE 102014226141
(43) Veröffentlichungstag der Anmeldung: 25.10.2017
(73) Patentinhaber: Continental Automotive GmbH, 30165 Hannover (DE)
(72) Erfinder: KUHLMANN, Peter, 35630 Ehringshausen (DE)
(86) Internationale Anmeldenummer: PCT/EP2015/079266
(87) Internationale Veröffentlichungsnummer: WO 2016/096605

(56) Entgegenhaltungen:
- DE-A1- 19 747 369
- DE-A1-102011 017 473
- DE-A1-102011 017 474
- DE-A1-102013 106 413

## Beschreibung

Die Erfindung betrifft ein Verfahren zum Empfang von Rundfunksignalen in einem Empfangsgerät und ein zur Durchführung des Verfahrens eingerichtetes Empfangsgerät. Das Empfangsgerät verfolgt über einen internen, d.h. in das Empfangsgerät integrierten, Rundfunkempfänger, der dazu eingerichtet ist, im Rahmen einer Empfangsverarbeitung der in einem Funkkanal empfangenen Rundfunksignale in an sich bekannter Weise eine Kanalschätzung zur Federkorrektur durchzuführen.

Eine solche Kanalschätzung basiert darauf, dass ein Maß für die Verzerrung des Funkkanals durch ein Fourierpaar gebildet wird, das aus einer Kanalimpulsantwort im Zeitbereich einer Kanalübertragungsfunktion im Frequenzbereich besteht. Bei einer Kanalschätzung wird eine der beiden Größen Kanalimpulsantwort oder Kanalübertragungsfunktionen aus dem zu übertragenden Signal hinzugefügten Daten bestimmt, die auch als Pilotinformationen bezeichnet werden. Diese Pilotinformationen dienen dem Empfänger als Referenz bei der Durchführung der Schätzung der Kanaleigenschaften. Eine Kanalschätzung kann dann auf die empfangenen Rundfunksignale angewendet werden, um eine Fehlerkorrektur durchzuführen. Eine solche Empfangsverarbeitung ist in der Regel notwendig, weil die Empfangsbedingungen von Rundfunkempfängern für Funksysteme in der Regel durch Mehrwegeempfang beeinträchtigt werden. Dies gilt für Funksysteme wie UKW, Kurzwelle, Mittelwelle, Langwelle, Digital Radio Mondiale (DRM), Digital Audio Broadcasting (DAB), Digital Video Broadcasting (DVB) oder dergleichen. Der Grund dafür liegt zum Teil in einem frequenzselektiven Schwund, welcher durch Streuobjekte im Gelände verursacht wird. Dies gilt sowohl für ortsfeste als auch mobile Rundfunkempfänger. Während mobile Rundfunkempfänger durch einen Wechsel der Empfangsumgebung die Empfangssituationen ändern können, bleibt diese bei ortsfesten Rundfunkempfängern gleich, so dass hier entsprechende Korrekturmöglichkeiten unbedingt notwendig sind.

Beispiele für ortsfeste Rundfunkempfänger sind Fernsehgeräte und Radiogeräte in Wohnungen. Auch im Falle von mobilen Rundfunkempfängern bspw. in Fahrzeugen (Autoradios) gibt es Sonderfälle, in denen der Rundfunkempfänger für mehrere Minuten ortsfest ist. Beispiele hierfür sind Wartesituationen auf Raststätten, vor der Wohnung des Autobesitzers, auf Aufsichtspunkten bei Ausflügen oder auf Parkplätzen bei Einkäufen. Dann ergibt sich eine quasi ortsfeste Situation des Empfängers, auch wenn das Empfangsgerät als solches mobil ist.

Die Feststellung, ob der betreffende Rundfunkempfänger eines an sich mobilen Empfangsgeräts zumindest quasi ortsfest ist, geschieht bei Kraftfahrzeugen in der Regel durch Auswertung von Ortsangaben eines Satellitenortungssystems, wie z.B. aus dem Global Position System (GPS), das in den meisten Fahrzeugen vorhanden ist.

Es ist bekannt, in Funksystemen Maßnahmen gegen Effekte aus dem Mehrwegeempfang vorzusehen und die Signalqualität zu verbessern. Zum Beispiel ist hierzu das Orthogonal Frequency Division Multiplex-Verfahren (OFDM) bekannt, das ausschließlich im Rundfunkempfänger durchgeführt wird. Dabei finden eine entsprechende Entzerrung der Signale, die Funkkanalschätzung und die Dekodierung der Signale statt. Dies wird nachfolgend auch als Empfangsverarbeitung bezeichnet. Diese Empfangsverarbeitung wird durch entsprechende Berechnungen in einer Recheneinheit des Rundfunkempfängers durchgeführt.

DE 10 2013 106 413 A1 betrifft ein Verfahren und eine Verarbeitungseinheit zum Verarbeiten eines Datensignals. Das Verfahren umfasst das Empfangen eines Datensignals, wobei das Datensignal zwei Trainingssequenzen umfasst sowie das Ausführen einer ersten Auswertung des Datensignals auf der Basis einer ersten Trainingssequenz der zwei Trainingssequenzen sowie des Weiteren das Ausführen einer zweiten Auswertung des Datensignals auf der Basis einer zweiten Trainingssequenz der zwei Trainingssequenzen und das Verarbeiten des Datensignals auf der Basis eines Ergebnisses der ersten und zweiten Auswertung.

Häufig lassen sich jedoch in dem Rundfunkempfänger keine Korrekturen durchführen, die zu einer ausreichenden Signalqualität führen.

Aufgabe der vorliegenden Erfindung ist es daher, eine verbesserte Empfangsverarbeitung von Rundfunksignalen zu erreichen.

Diese Aufgabe wird durch ein Verfahren mit den Merkmalen des Anspruchs 1 und ein Empfangsgerät mit den Merkmalen des Anspruchs 11 gelöst. Dabei ist insbesondere vorgesehen, dass der interne Rundfunkempfänger mit einem externen, d.h. entfernt von dem internen Rundfunkempfänger angeordneten, Rundfunkempfänger kommuniziert, welcher zum Messzeitpunkt die gleichen Rundfunksignale erhält wie der interne Rundfunkempfänger. Der externe Rundfunkempfänger führt eine Kanalschätzung zur Fehlerkorrektur durch und übermittelt diese Kanalschätzung an den internen Rundfunkempfänger.

Dieser nutzt die Kanalschätzung des externen Rundfunkempfängers, um seine eigene Kanalschätzung zu verbessern. Erfindungsgemäß wird also zusätzlich zu der internen Empfangsverarbeitung eine externe Empfangsverarbeitung durchgeführt. Die externe Empfangsverarbeitung teilt erfindungsgemäß ihre Informationen und Ergebnisse, insbesondere in Form einer Kanalschätzung, der internen Empfangsverarbeitung mit, so dass die interne Empfangsverarbeitung entsprechend dieser Informationen verbessert werden kann.

Die externe Empfangsverarbeitung kann dabei im Sonderfall auch die interne Empfangsverarbeitung vollständig ersetzen, wenn das decodierte Rundfunksignal dem internen Rundfunkempfänger in nutzbarer Form, d.h. insbesondere zur Wiedergabe des Rundfunksignals, direkt übermittelt wird. Dies kann bspw. dann sinnvoll sein, wenn der interne Rundfunkempfänger nicht in der Lage ist, ein aufarbeitbares Rundfunksignal zu empfangen. Entsprechend kann die interne Empfangsverarbeitung im Sonderfall umgekehrt auch die Informationen der externen Empfangsverarbeitung verwerfen und somit vorübergehend oder dauerhaft autark arbeiten, bspw. wenn das Signal des internen Rundfunkempfängers qualitativ besser ist aus das Signal des externen Rundfunkempfängers.

Erfindungsgemäß wird der externe Rundfunkempfänger so betrieben, dass er genau die gleichen Eingangssignale wie der interne Rundfunkempfänger zur Messzeit, d.h. dem Messzeitpunkt, erhält. Dies kann in einer Ausführungsform bspw. über einen Antennensplitter erfolgen. In einer anderen Ausführungsform ist es auch möglich, die gleichen Eingangssignale durch eine digitale Übertragung von gesampelten Messwerten des Eingangssignals zu erzeugen.

Unabhängig von der Art und Weise, wie erfindungsgemäß die gleichen Eingangssignale in dem internen wie dem externen Rundfunkempfänger zur Verfügung stehen, wird der externe Rundfunkempfänger dazu benutzt, eine möglichst optimale Kanalschätzung vorzunehmen. Dies wird bspw. dadurch erreicht, dass der externe Rundfunkempfänger in der Regel eine sehr hohe Rechenleistung und eine sehr gute Empfangsempfindlichkeit aufweist. Diese technisch aufwendigere und damit teurere Ausstattung des externen Rundfunkempfängers ist erfindungsgemäß dadurch möglich, dass ein externer Rundfunkempfänger in Kommunikation mit einer Vielzahl von internen Rundfunkempfängern treten kann. Dies rechtfertigt höhere Kosten für einen qualitativ besseren externen Empfänger.

Für die Empfangsverarbeitung kann der externe Rundfunkempfänger ferner Funkprognosen nutzen, um den Mehrwegeempfang aufgrund von baulichen Umgebungsdaten zu schätzen.

Ferner kann der externe Empfänger ein hochgenaues Zeitnormal, bspw. ein Rubidium-Normal oder eine Atomuhr, nutzen, um den Zeitpunkt des Empfangs genau zu bestimmen. So kann das Sendesignal zu dem gegebenen Zeitpunkt genau ermittelt werden und eine optimale Schätzung des Sendesignals erfolgen.

Die Kommunikationsverbindung zwischen dem externen Rundfunkempfänger und dem internen Rundfunkempfänger kann bspw. über Funk oder über ein Kabel erfolgen. Über diese Kommunikationsverbindung kann der externe Rundfunkempfänger dem internen Rundfunkempfänger seine Kanalschätzung mitteilen, die der interne Rundfunkempfänger dann nutzt, um seine eigene Kanalschätzung aus den selbst empfangenen Daten zu verbessern.

Gemäß einer bevorzugten Ausführungsform kann dazu vorgesehen sein, dass der interne Rundfunkempfänger eine inverse Übertragungsfunktion, welche sich aus der Kanalschätzung des externen Rundfunkempfängers ergibt und welche von dem externen Rundfunkempfänger übermittelt wurde, mit einer Fouriertransformierten seines eigenen Eingangssignals multipliziert. Dadurch erhält der interne Rundfunkempfänger eine sehr gute Schätzung des Sendesignals, so dass er seine eigene Kanaldecodierung auf diesem vorverarbeiteten Signal aufsetzen kann.

Ferner kann erfindungsgemäß vorgesehen sein, dass der interne Rundfunkempfänger Korrelationsberechnungen durchführt, um die Kanalabschätzung des externen Rundfunkempfängers mit seiner Kanalschätzung in Einklang zu bringen. Dies kann insbesondere in Ergänzung zur direkten Verwendung der inversen Übertragungsfunktion durch weitere Berechnungen erfolgen, die dazu dienen, die von dem externen Rundfunkempfänger vorgegebenen Daten mit den internen Daten in Einklang bzw. Übereinstimmung zu bringen. Ein bevorzugtes Beispiel dafür ist die Berechnung der Korrelation der externen Übertragungsfunktion mit der intern bestimmten Übertragungsfunktion über das Frequenzband und die Ermittlung einer zugehörigen Korrektur der extern bestimmten Übertragungsfunktion, z.B. eine Verschiebung bezüglich des Frequenz-Offsets.

Erfindungsgemäß kann ferner vorgesehen sein, dass der interne Rundfunkempfänger ein autarke Empfangsverarbeitung durchführt und überprüft, ob hierdurch ein besseres Empfangssignal erhalten wird als durch Verwendung der Daten bzw. Übertragungsfunktionen des externen Rundfunkempfängers. Entsprechend kann der interne Rundfunkempfänger dann das vorverarbeitete Signal des externen Rundfunkempfängers auch auslassen, um zu prüfen, ob eine direkte interne Empfangsverarbeitung ähnliche oder wider Erwarten sogar bessere Ergebnisse erzielt als bei Verwendung der Daten des externen Rundfunkempfängers. In diesem Fall kann der interne Rundfunkempfänger vorübergehend, oder auch dauerhaft, autark arbeiten.

Erfindungsgemäß kann ferner vorgesehen sein, dass der interne Rundfunkempfänger dem externen Rundfunkempfänger das Ergebnis einer von dem internen Rundfunkempfänger durchgeführten Signaldecodierung mitteilt, der externe Rundfunkempfänger dieses Ergebnis mit dem Ergebnis einer von dem externen Rundfunkempfänger durchgeführten Signaldecodierung vergleicht und Korrekturen ermittelt, welche der externe Rundfunkempfänger an den internen Rundfunkempfänger übermittelt. Hierdurch wird die meist bessere Rechenleistung des externen Rundfunkempfängers ausgenutzt. Dies kann auch parallel zu einem Empfang und einer Wiedergabe des Rundfunksignals durch den internen Rundfunkempfänger erfolgen.

Erfindungsgemäß kann die Kommunikation zwischen dem internen Rundfunkempfänger und dem externen Rundfunkempfänger nur temporär erfolgen. Dazu zählt, dass die Kommunikation nur selten oder sogar nur einmal erfolgt. Eine solch seltene oder einmalige Kommunikation ist in der Regel für ortsfeste interne Empfänger geeignet, bei denen die wichtigsten Streuobjekte, welche den Mehrwegeempfang hervorrufen, wie Häuser oder Berge, in der Regel unveränderlich sind, und sich nur durch seltene bauliche Maßnahmen oder nur über die Jahreszeiten ändern.

In einer anderen Ausführungsform kann die Kommunikation zwischen dem internen Rundfunkempfänger und dem externen Rundfunkempfänger, sofern die Kommunikationsverbindung möglich ist, auch andauernd erfolgen. Dies ist insbesondere bei mobilen internen Rundfunkempfängern der Fall, die ihren Empfangsstandort häufig ändern.

Insbesondere im Falle eines internen mobilen Empfängers in einem Fahrzeug, insbesondere in einem Kraftfahrzeug, kann vorgesehen sein, dass der in dem Fahrzeug installierte Empfänger eine längere Standzeit feststellt, seine Position bspw. durch Zusammenwirken mit einer Positionserkennung Global Position System (GPS) oder dergleichen ermittelt und eine verbesserte Kanalschätzung in einer Datenbank positionsbezogen speichert. Diese kann er bspw. in einer Kommunikation mit einem an der aktuellen Position vorhandene externen Rundfunkempfänger ermittelt haben.

Auf diese gespeicherten Daten kann der interne Empfänger dann wieder zugreifen, wenn er sich wieder an dieser Position befindet. Dies ist insbesondere sinnvoll, wenn das Fahrzeug häufiger an wiederkehrenden Positionen wartet und dabei ein Rundfunkempfang stattfinden soll.

Ferner kann erfindungsgemäß zur weiteren Verbesserung der Empfangssignalverarbeitung vorgesehen sein, dass der externe Rundfunkempfänger direkten Zugriff auf den Programminhalt zum Messzeitpunkt hat, bspw. weil der externe Rundfunkempfänger der Sender selbst ist oder bspw. über das Internet den Programminhalt empfängt. Dann kann der externe Rundfunkempfänger das Sendesignal ohne Übertragungsverluste eigenständig erzeugen und somit eine besonders hochwertige Kanalschätzung durchführen.

Insbesondere bei einem lokal feststehenden, externen Rundfunkempfänger kann eine Übertragungsfunktion auch aufgrund eines Funkwellenausbreitungsmodells vorhergesagt werden, welches Gelände- und Bauwertdaten am Ort des internen Empfängers berücksichtigt. Diese können bspw. in einer entsprechenden Datenbank gespeichert sein. Damit kann der externe Rundfunkempfänger sowohl die Vorhersage der Übertragungsfunktion aufgrund eines Funkwellenausbreitungsmodells als auch seine eigenen Empfangsdaten für die Kanalschätzung zugrunde legen und die Ergebnisse bspw. mit üblichen Rechentechniken korrelieren. Dies führt zu einer besonders hohen Qualität der Kanalschätzung.

Die Erfindung betrifft auch ein Empfangsgerät zum Rundfunkempfang entsprechend dem nebengeordneten Anspruch 11. Das Empfangsgerät ist mit einem internen Rundfunkempfänger ausgestattet, welcher dazu eingerichtet ist, im Rahmen einer Empfangsverarbeitung der in einem Funkkanal empfangenen Rundfunksignale in an sich bekannter Weise eine Kanalschätzung zur Fehlerkorrektur durchzuführen. Ferner weist das Empfangsgerät einen externen Rundfunkempfänger auf, welcher dazu eingerichtet ist, im Rahmen einer Empfangsverarbeitung der in einem Funkkanal empfangenen Rundfunksignale in an sich bekannter, ggf. sogar identischer Weise wie der interne Rundfunkempfänger, eine Kanalschätzung zur Fehlerkorrektur durchzuführen. Zwischen dem Empfangsgerät mit dem internen Rundfunkempfänger und dem externen Rundfunkempfänger kann insbesondere eine Funkkommunikation oder eine kabelgebundene Kommunikation stattfinden.

Erfindungsgemäß ist vorgesehen, dass sowohl der externe Rundfunkempfänger als auch der interne Rundfunkempfänger über eine Kommunikationseinheit zur Kommunikation untereinander verfügen und jeweils eine Recheneinheit aufweisen, wobei die Recheneinheiten des internen Rundfunkempfängers und des externen Rundfunkempfänger, ggf. auch in der Zusammenwirkung, jeweils zur Durchführung des vorbeschriebenen Verfahrens oder Teilen hiervon eingerichtet sind.

Der besondere Vorteil der vorliegenden Erfindung liegt darin, einen in der Regel technisch aufwendigen externen Rundfunkempfänger parallel zu einem internen Rundfunkempfänger des Empfangsgeräts vorzuschlagen, um die Kanalschätzung des in der Regel technisch einfacheren internen Rundfunkempfängers zu verbessern. Der externe Rundfunkempfänger verfügt über eine Vielzahl von Hilfsmitteln, wie sie beispielhaft erwähnt wurden, um eine möglichst gute oder optimale Kanalschätzung durchzuführen. Diese besonders gute Kanalschätzung teilt er dann dem internen Rundfunkempfänger mit, der auf dieser Grundlage eine Vorverarbeitung und Korrektur der von ihm empfangenen Rundfunksignale vornimmt.

Weitere Vorteile, Merkmale und Anwendungsmöglichkeiten der vorliegenden Erfindung ergeben sich auch aus der nachfolgenden Beschreibung von Ausführungsbeispielen und der Zeichnung. Dabei bilden alle beschriebenen und/oder bildlich dargestellten Merkmale für sich oder in beliebiger Kombination den Gegenstand der vorliegenden Erfindung, auch unabhängig von ihrer Zusammenfassung in den Ansprüchen oder deren Rückbezügen.

Es zeigen:
- Fig. 1: Schematisch ein erfindungsgemäßes Empfangsgerät mit einem ortsfesten internen Empfänger;
- Fig. 2: Schematisch ein Ausführungsbeispiel der vorliegenden Erfindung mit einem mobilen internen Empfänger; und
- Fig. 3: Schematisch eine Variante der Ausführungsform gemäß Fig. 1.

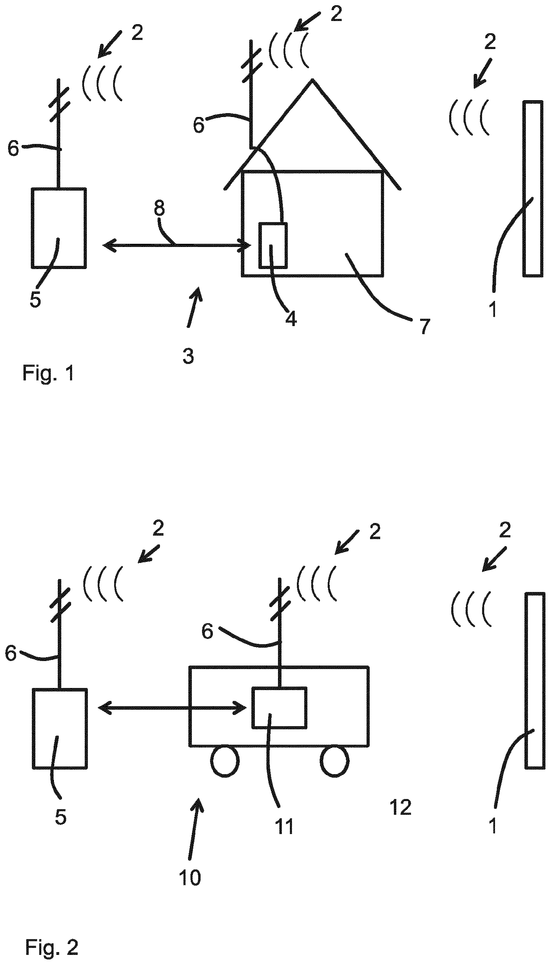

In Fig. 1 ist ein Rundfunksender 1 dargestellt, der ein Rundfunksignal 2 aussendet.

Das Rundfunksignal 2 wird durch ein erfindungsgemäßes Empfangsgerät 3 empfangen, welches einen internen Rundfunkempfänger 4 und einen externen Rundfunkempfänger 5 aufweist, die jeweils über ihnen zugeordnete Antennen 6 empfängt. Beispielsweise handelt es sich bei dem internen Rundfunkempfänger 4 um einen ortsfesten Fernsehempfänger in einem Wohnhaus 7 mit einer als Dachantenne ausgebildeten ortsfesten Antenne 6. Bei der Installation der Dachantenne 6 wird von dem Installateur der externe Rundfunkempfänger 5 zu Rate gezogen, um eine gute oder optimale Kanalschätzung vorzunehmen und Effekte durch den Mehrwegeempfang zu korrigieren.

Bei dem externen Rundfunkempfänger 5 kann es sich bspw. um einen von dem Installateur mitgebrachten, hochwertigen Rundfunkempfänger mit hoher Rechenleistung und guter Empfangsempfindlichkeit handeln, der bspw. in einem Fahrzeug montiert ist oder von dem Installateur an einem geeigneten Ort aufgestellt wird. Zwischen dem internen Rundfunkempfänger 4 und dem externen Rundfunkempfänger 5 besteht eine Kommunikationsverbindung 8, bspw. per Funk oder über ein Kabel.

Die von dem externen Rundfunkempfänger 5 geschätzten Streuverhältnisse am Empfangsort werden von dem externen Rundfunkempfänger 5 an den internen (ortsfesten) Rundfunkempfänger 4 über die Kommunikationsverbindung 8, bspw. eine Funkverbindung oder ein USB-Kabel, übermittelt. Der interne Rundfunkempfänger4 benutzt die ihm übermittelte Übertragungsfunktion des externen Rundfunkempfängers 5, um die hierdurch am Empfangsort bekannten Reflexionen aus dem Empfangssignal herauszurechnen und somit das Sendesignal (Rundfunksignal 2) gut zu schätzen. Dieses geschätzte Sendesignal wird dann der Signaldekodierung zugrunde gelegt.

Diese Vorverarbeitung (insbesondere Kanalschätzung) wird im späteren Betrieb ständig genutzt, so dass sie automatisiert abläuft. Der externe Rundfunkempfänger 5 kann von Zeit zu Zeit verwendet werden, um das Korrektursignal für die Vorverarbeitung auf einen neuen Stand zu bringen, bspw. bei einer Wartung des Empfangsgeräts 3 oder wenn der externe Rundfunkempfänger 5 zur Verfügung steht.

Falls es sich bei dem externen Rundfunkempfänger 5 um ein bspw. in einer Siedlung zur Verbesserung der Kanalschätzung angeordneten, fest installierten externen Rundfunkempfänger 5 handelt, kann dieser bspw. auch über das Internet als Kommunikationsverbindung 8 mit dem internen Rundfunkempfänger 4 kommunizieren, um das Korrektursignal auf den neuesten Stand zu bringen.

Insbesondere im Falle eines fest installierten externen Rundfunkempfängers 5 kann dieser für eine Empfangsverarbeitung auch ein qualitativ hochwertiges Funkwellenausbreitungsmodell verwenden, welches in der Lage ist, auf Basis einer sehr genauen Gelände- und Bauwertdatenbank die Übertragungsfunktion am Ort des internen Empfängers zum Messzeitpunkt vorherzusagen. Er überträgt diese Übertragungsfunktion an den internen Rundfunkempfänger 4, der diese Informationen in der eingangs bereits beschriebenen Art und Weise verwendet, um seine eigene Kanalschätzung zu verbessern.

Ergänzend kann der externe Rundfunkempfänger 5 auch eine Kombination einer Kanalschätzung aus einem Funkwellenausbreitungsmodell und den tatsächlich empfangenen Rundfunksignalen 2 verwenden, um eine zweite Schätzung der Übertragungsfunktion vorzunehmen. Er bewertet beide Schätzungen und übermittelt durch die Bewertungen als optimal ermittelte Übertragungsfunktion an den internen Rundfunkempfänger 4. Optional kann der interne Rundfunkempfänger 4 auch beide Übertragungsfunktionen erhalten und selbst auswerten.

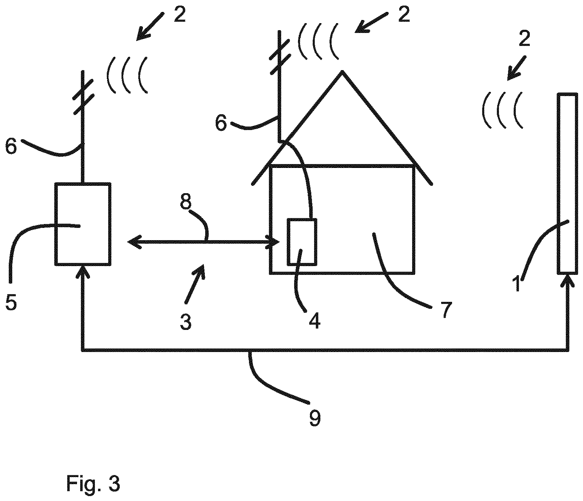

Fig. 3 zeigt eine Variante der Ausführungsform gemäß Fig. 1, bei der zusätzlich eine Internetverbindung 9 (oder dergleichen Kommunikationsverbindung) zwischen dem Rundfunksender 1 und dem externen Rundfunkempfänger 5 besteht. Über diese Internetverbindung 9 hat der externe Rundfunkempfänger 5 Zugriff auf den vollständigen Programminhalt zum Messzeitpunkt, d.h. zum Übertragungs- bzw. Empfangszeitpunkt der Rundfunksignale 2. Aufgrund des fehlerfreien und nicht aufgrund von Mehrwegeempfang oder dergleichen gestörten Signals mit dem vollständigen Programminhalt kann der externe Rundfunkempfänger 5 das Sendesignal eigenständig berechnen, welches zu dem aktuellen Messzeitpunkt passt. Gegebenenfalls hat er auch direkten Zugriff auf das Sendesignal, welches ihm von dem Rundfunksender 1 unmittelbar übertragen wird.

Hierdurch kann der externe Rundfunkempfänger eine optimale Kanalschätzung vornehmen, weil er das zu rekonstruierende Signal auf anderem Wege parallel zu dem Rundfunksignal 2 empfängt und somit eine optimale Kanalschätzung vornehmen kann.

In Fig. 2 ist eine weitere Ausführungsform der vorliegenden Erfindung mit einem Empfangsgerät 10 dargestellt, das einen externen Rundfunkempfänger 5 mit Antenne 6 zum Empfang von Rundfunksignalen 2 und einem internen Empfänger 11 mit Antenne 6 zum Empfang von Rundfunksignalen 2 aufweist, die durch einen Rundfunksender 1 ausgesendet werden.

Im Gegensatz zu dem internen Rundfunkempfänger 4 gemäß den Ausführungsformen in den Fig. 1 und 3 befindet sich der interne Rundfunkempfänger 11 in einem Fahrzeug 12. Der interne Rundfunkempfänger 11 merkt sich als mobiler Rundfunkempfänger die Aufenthaltspositionen in allen Situationen, in denen das Fahrzeug 12 längere Zeit steht und verwendet ein genaues Zeitnormal. Beispielsweise kann als Zeitnormal ein über den Kontrollkanal des Funksystems ermittelter Zeitstempel verwendet werden. Im Beispiel des Digital Audio Broadcasting (DAB) steht hierfür die Fast Information Group (FIG) 0/10 zur Verfügung.

Stellt der interne Rundfunkempfänger 11 eine Situation fest, in der er längere Zeit an einer Position steht, überträgt er seine Empfangsmessungen für einen gewissen Zeitraum zusammen mit seiner Position und seiner aus dem genauen Zeitraum gewonnenen Uhrzeit vorzugsweise per Funk an den externen Rundfunkempfänger 5. Dieser überträgt das geschätzte Sendesignal, welches auf seinem Empfangssignal basiert, das zu dem betreffenden Zeitpunkt gemessen wurde, zurück an den internen Rundfunkempfänger 11.

Der externe Rundfunkempfänger 5 kann stattdessen unter Umständen auch das Sendesignal selbst, also das optimale Empfangssignal zum genauen Messzeitpunkt, an den internen Rundfunkempfänger 11 übermitteln, falls der externe Rundfunkempfänger 5 Kenntnis von dem Sendesignal zum betreffenden Messzeitpunkt hat.

Der interne Rundfunkempfänger 11 nutzt dieses geschätzte Signal, um seine Kanalschätzung für die gegebene Position zu verbessern. Er kann alle Informationen zu dieser Korrekturmaßnahme positionsabhängig abspeichern und später wieder laden und verwenden, sobald der interne Rundfunkempfänger 11 mit dem Fahrzeug 12 die betreffende Position wieder erreicht und feststellt, dass er sich an dieser Position in Ruhe befindet.

## Patentansprüche

1. Verfahren zum Empfang von Rundfunksignalen (2) in einem Empfangsgerät (3, 10), welches über einen internen Rundfunkempfänger (4, 11) verfügt, der dazu eingerichtet ist, im Rahmen einer Empfangsverarbeitung der in einem Funkkanal empfangenen Rundfunksignale (2) eine Kanalschätzung zur Fehlerkorrektur durchzuführen, **dadurch gekennzeichnet, dass** der interne Rundfunkempfänger (4, 11) mit einem externen Rundfunkempfänger (5) kommuniziert, welcher zum Messzeitpunkt die gleichen Rundfunksignale (2) erhält wie der interne Rundfunkempfänger (4, 11), eine Kanalschätzung zur Fehlerkorrektur durchführt und die Kanalschätzung an den internen Rundfunkempfänger (4, 11) übermittelt, wobei der interne Rundfunkempfänger (4, 11) die Kanalschätzung des externen Rundfunkempfängers (5) nutzt, um seine eigene Kanalschätzung zu verbessern.

2. Verfahren nach Anspruch 1, **dadurch gekennzeichnet, dass** der interne Rundfunkempfänger (4, 11) eine inverse Übertragungsfunktion, welche sich aus der Kanalschätzung des externen Rundfunkempfängers (5) ergibt und welche von dem externen Rundfunkempfänger (5) übermittelt wurde, mit einer Fouriertransformierten seines eigenen Eingangssignals multipliziert.

3. Verfahren nach Anspruch 1 oder 2, **dadurch gekennzeichnet, dass** der interne Rundfunkempfänger (4, 11) Korrelationsberechnungen durchführt, um die Kanalschätzung des externen Rundfunkempfängers (5) mit seiner Kanalschätzung in Einklang zu bringen.

4. Verfahren nach einem der vorhergehenden Ansprüche, **dadurch gekennzeichnet, dass** der interne Rundfunkempfänger (4, 11) eine autarke Empfangsverarbeitung durchführt und überprüft, ob hierdurch ein besseres Empfangssignal erhalten wird.

5. Verfahren nach einem der vorhergehenden Ansprüche, **dadurch gekennzeichne**t, dass der interne Rundfunkempfänger (4, 11) dem externen Rundfunkempfänger (5) das Ergebnis einer von dem internen Rundfunkempfänger (4, 11) durchgeführten Signaldekodierung mitteilt, der externe Rundfunkempfänger (5) dieses Ergebnis mit dem Ergebnis einer von dem externen Rundfunkempfänger (5) durchgeführten Signaldekodierung vergleicht und Korrekturen ermittelt, welcher der externe Rundfunkempfänger (5) an den internen Rundfunkempfänger (4, 11) übermittelt.

6. Verfahren nach einem der vorhergehenden Ansprüche, **dadurch gekennzeichne**t, dass die Kommunikation zwischen dem internen Rundfunkempfänger (4, 11) und dem externen Rundfunkempfänger (5) nur temporär erfolgt.

7. Verfahren nach einem der Ansprüche 1 bis 5, **dadurch gekennzeichnet, dass** die Kommunikation zwischen dem internen Rundfunkempfänger (4, 11) und dem externen Rundfunkempfänger (5) andauernd erfolgt.

8. Verfahren nach einem der vorhergehenden Ansprüche, **dadurch gekennzeichnet, dass** der interne Rundfunkempfänger (11) in einem Fahrzeug (12) installiert ist und eine längere Standzeit feststellt, seine Position ermittelt und eine verbesserte Kanalschätzung in einer Datenbank positionsbezogen speichert.

9. Verfahren nach einem der vorhergehenden Ansprüche, **dadurch gekennzeichnet, dass** der externe Rundfunkempfänger (5) Zugriff auf den Programminhalt zum Messzeitpunkt hat und das Sendesignal eigenständig erzeugt.

10. Verfahren nach einem der vorhergehenden Ansprüche, **dadurch gekennzeichnet, dass** der externe Rundfunkempfänger (5) eine Übertragungsfunktion aufgrund eines Funkwellenausbreitungsmodells auf Basis einer Gelände- und Bauwertdatenbank am Ort des internen Rundfunkempfängers (4) vorhersagt.

11. Empfangsgerät zum Rundfunkempfang mit einen internen Rundfunkempfänger (4, 11), welcher dazu eingerichtet ist, im Rahmen einer Empfangsverarbeitung der in einem Funkkanal empfangenen Rundfunksignale (2) eine Kanalschätzung zur Fehlerkorrektur durchzuführen, und mit einem externen Rundfunkempfänger (5), welcher dazu eingerichtet ist, im Rahmen einer Empfangsverarbeitung der in einem Funkkanal empfangenen Rundfunksignale (3) eine Kanalschätzung zur Fehlerkorrektur durchzuführen, **dadurch gekennzeichnet, dass** der externe Rundfunkempfänger (5) und der interne Rundfunkempfänger (4, 11) über eine Kommunikationseinheit zur Kommunikation (8) untereinander verfügen und jeweils eine Recheneinheit aufweisen, wobei die Recheneinheiten des internen Rundfunkempfängers (4, 11) und des externen Rundfunkempfängers (5) jeweils zur Durchführung des Verfahrens nach einem der Ansprüche 1 bis 10 eingerichtet sind.

## Claims

1. Method for receiving radio signals (2) in a receiving device (3, 10) which has an internal radio receiver (4, 11) which is configured to perform as part of processing reception of the radio signals (2) received in a radio channel, a channel estimation for error correction, **characterized in that** the internal radio receiver (4, 11) communicates with an external radio receiver (5) which, at the measuring time, receives the same radio signals (2) as the internal radio receiver (4, 11), performs a channel estimation for error correction and conveys the channel estimation to the internal radio receiver (4, 11), the internal radio receiver (4, 11) utilizing the channel estimation of the external radio receiver (5) for improving its own channel estimation.

2. Method according to Claim 1, **characterized in that** the internal radio receiver (4, 11) multiplies an inverse transfer function which is obtained from the channel estimation of the external radio receiver (5) and which has been conveyed by the external radio receiver (5), by a Fourier transform of its own input signal.

3. Method according to Claim 1 or 2, **characterized in that** the internal radio receiver (4, 11) performs correlation calculations in order to harmonize the channel estimation of the external radio receiver (5) with its channel estimation.

4. Method according to one of the preceding claims, **characterized in that** the internal radio receiver (4, 11) performs autonomous reception processing and checks whether by this means a better received signal is obtained.

5. Method according to one of the preceding claims, **characterized in that** the internal radio receiver (4, 11) informs the external radio receiver (5) of the result of a signal decoding performed by the internal radio receiver (4, 11), the external radio receiver (5) compares this result with the result of a signal decoding performed by the external radio receiver (5) and determines corrections which are conveyed to the internal radio receiver (4, 11) by the external radio receiver (5).

6. Method according to one of the preceding claims, **characterized in that** the communication between the internal radio receiver (4, 11) and the external radio receiver (5) only takes place temporarily.

7. Method according to one of Claims 1 to 5, **characterized in that** the communication between the internal radio receiver (4, 11) and the external radio receiver (5) takes place continuously.

8. Method according to one of the preceding claims, **characterized in that** the internal radio receiver (11) is installed in a vehicle (12) and determines a relatively long standing time, determines its positon and stores an improved channel estimation in a database in a position-related manner.

9. Method according to one of the preceding claims, **characterized in that** the external radio receiver (5) has access to the program content at the measuring time and generates the transmit signal independently.

10. Method according to one of the preceding claims, **characterized in that** the external radio receiver (5) predicts a transfer function on the basis of a radiowave propagation model on the basis of a terrain and building database at the location of the internal radio receiver (4).

11. Receiving device for radio reception by means of an internal radio receiver (4, 11) which is configured to perform a channel estimation for error correction as part of reception processing of the radio signals (2) received in a radio channel and having an external radio receiver (5) which is configured to perform a channel estimation for error correction as part of reception processing of the radio signals (3) received in a radio channel, **characterized in that** the external radio receiver (5) and the internal radio receiver (4, 11) have a communication unit for communication (8) between one another and have in each case a computing unit, the computing units of the internal radio receiver (4, 11) and of the external radio receiver (5) being configured in each case for performing the method according to one of Claims 1 to 10.

## Revendications

1. Procédé de réception de signaux radiodiffusés (2) dans un appareil de réception (3, 10), lequel dispose d'un récepteur de radiodiffusion interne (4, 11) qui est conçu pour, dans le cadre d'un traitement de réception des signaux radiodiffusés (2) reçus dans un canal radio, effectuer une estimation de canal en vue de la correction d'erreur, **caractérisé en ce que** le récepteur de radiodiffusion interne (4, 11) communique avec un récepteur de radiodiffusion externe (5) qui, à l'instant de la mesure, reçoit les mêmes signaux radiodiffusés (2) que le récepteur de radiodiffusion interne (4, 11), effectue une estimation de canal en vue de la correction d'erreur et communique l'estimation de canal au récepteur de radiodiffusion interne (4, 11), le récepteur de radiodiffusion interne (4, 11) utilisant l'estimation de canal du récepteur de radiodiffusion externe (5) pour améliorer sa propre estimation de canal.

2. Procédé selon la revendication 1, **caractérisé en ce que** le récepteur de radiodiffusion interne (4, 11) multiplie une fonction de transmission inverse, laquelle résulte de l'estimation de canal du récepteur de radiodiffusion externe (5) et qui a été déterminée par le récepteur de radiodiffusion externe (5), par une transformée de Fourier de son propre signal d'entrée.

3. Procédé selon la revendication 1 ou 2, **caractérisé en ce que** le récepteur de radiodiffusion interne (4, 11) effectue des calculs de corrélation afin de mettre l'estimation de canal du récepteur de radiodiffusion externe (5) en accord avec son estimation de canal.

4. Procédé selon l'une des revendications précédentes, **caractérisé en ce que** le récepteur de radiodiffusion interne (4, 11) effectue un traitement de réception autonome et vérifie si un signal de réception amélioré est ainsi obtenu.

5. Procédé selon l'une des revendications précédentes, **caractérisé en ce que** le récepteur de radiodiffusion interne (4, 11) communique au récepteur de radiodiffusion externe (5) le résultat d'un décodage de signal effectué par le récepteur de radiodiffusion interne (4, 11), le récepteur de radiodiffusion externe (5) compare ce résultat avec le résultat d'un décodage de signal effectué par le récepteur de radiodiffusion externe (5) et détermine des corrections, que le récepteur de radiodiffusion externe (5) communique au récepteur de radiodiffusion interne (4, 11).

6. Procédé selon l'une des revendications précédentes, **caractérisé en ce que** la communication entre le récepteur de radiodiffusion externe (5) et le récepteur de radiodiffusion interne (4, 11) s'effectue seulement temporairement.

7. Procédé selon l'une des revendications 1 à 5, **caractérisé en ce que** la communication entre le récepteur de radiodiffusion externe (5) et le récepteur de radiodiffusion interne (4, 11) s'effectue en continu.

8. Procédé selon l'une des revendications précédentes, **caractérisé en ce que** le récepteur de radiodiffusion interne (11) est installé dans un véhicule (12) et définit une durée de service plus longue, détermine sa position et enregistre une estimation de canal améliorée en référence à la position dans une base de données.

9. Procédé selon l'une des revendications précédentes, **caractérisé en ce que** le récepteur de radiodiffusion externe (5) possède un accès au contenu du programme à l'instant de la mesure et génère le signal émis de manière autonome.

10. Procédé selon l'une des revendications précédentes, **caractérisé en ce que** le récepteur de radiodiffusion externe (5) prédit une fonction de transmission sur la base d'un modèle de propagation des ondes radioélectriques en s'appuyant sur une base de données de valeurs de terrain et de constructions à l'endroit du récepteur de radiodiffusion interne (4).

11. Appareil de réception servant à la réception de radiodiffusion, comprenant un récepteur de radiodiffusion interne (4, 11) qui est conçu pour, dans le cadre d'un traitement de réception des signaux radiodiffusés (2) reçus dans un canal radio, effectuer une estimation de canal en vue de la correction d'erreur, et comprenant un récepteur de radiodiffusion externe (5) qui est conçu pour, dans le cadre d'un traitement de réception des signaux radiodiffusés (3) reçus dans un canal radio, effectuer une estimation de canal en vue de la correction d'erreur, **caractérisé en ce que** le récepteur de radiodiffusion externe (5) et le récepteur de radiodiffusion interne (4, 11) disposent d'une unité de communication servant à la communication (8) entre eux et possèdent respectivement une unité de calcul, les unités de calcul du récepteur de radiodiffusion interne (4, 11) et du récepteur de radiodiffusion externe (5) étant respectivement conçues pour mettre en oeuvre le procédé selon l'une des revendications 1 à 10.
